(19) Europäisches Patentamt

European Patent Office

Office européen des brevets

(11) **EP 1 349 263 A1**

(12) **EUROPÄISCHE PATENTANMELDUNG**

(43) Veröffentlichungstag:
  **01.10.2003   Patentblatt 2003/40**

(51) Int Cl.⁷: **H02M 1/00**

(21) Anmeldenummer: **02405208.6**

(22) Anmeldetag: **18.03.2002**

(84) Benannte Vertragsstaaten:
  **AT BE CH CY DE DK ES FI FR GB GR IE IT LI LU MC NL PT SE TR**
  Benannte Erstreckungsstaaten:
  **AL LT LV MK RO SI**

(71) Anmelder: **ABB Schweiz AG**
  **5400 Baden (CH)**

(72) Erfinder:
  • **Hillberg, Claes**
   **4313 Möhlin (CH)**

  • **Daehler, Peter**
   **5236 Remigen (CH)**

(74) Vertreter: **ABB Patent Attorneys**
   **c/o ABB Schweiz AG,**
   **Intellectual Property (CH-LC/IP),**
   **Brown Boveri Strasse 6**
   **5400 Baden (CH)**

(54) **Verfahren zum Betrieb eines Transformators an einer ansteuerbaren Spannungsquelle sowie Vorrichtung zur Durchführung des Verfahrens**

(57) Es wird Verfahren zum Betrieb eines Transformators (1) an einer ansteuerbaren Spannungsquelle (2) angegeben, bei dem die Spannungsquelle (2) eine Ausgangsspannung ($u_A$) zur Einspeisung von Wirkleistung und/oder Blindleistung über den Transformator (1) in ein elektrisches Wechselspannungsversorgungsnetz (3) erzeugt und ein Ausgangsstrom ($i_A$) der Spannungsquelle (2) auf einen maximal zulässigen Wert ($i_{Amax}$) hin überwacht wird, wobei der magnetische Fluss ($\phi$) des Transformators (1) fortlaufend ermittelt wird und die Spannungsquelle (2) bei Überschreiten des maximal zulässigen Wertes ($i_{Amax}$) des Ausgangsstromes ($i_A$) vom Transformator (1) getrennt wird. Auf ein Startsignal ($S_s$) hin wird eine Ausgangsspannung ($u_A$) in Abhängigkeit einer vor dem Überschreiten des maximal zulässigen Wertes ($i_{Amax}$) des Ausgangsstromes ($i_A$) zuletzt ermittelten Transformatorspannung ($u_{TX}$) und eines vor dem Überschreiten des maximal zulässigen Wertes ($i_{Amax}$) des Ausgangsstromes ($i_A$) zuletzt ermittelten ersten magnetischen Flusses ($\phi_1$) und eines zum Zeitpunkt des Startsignals ($S_s$) ermittelten zweiten magnetischen Flusses ($\phi_2$) gebildet, wobei die Ausgangsspannung ($u_A$) ab einem einstellbaren Schaltzeitpunkt ($t_0$) für eine einstellbare Zeitdauer ($T_0$) an den Transformator (1) angelegt wird. Darüber hinaus wird eine Vorrichtung zur Durchführung des Verfahrens

**Fig. 1**

EP 1 349 263 A1

**Beschreibung**

**Technisches Gebiet**

Die Erfindung bezieht sich auf das Gebiet der Leistungselektronik. Sie geht aus von einem Verfahren zum Betrieb eines Transformators an einer ansteuerbaren Spannungsquelle sowie von einer Vorrichtung zur Durchführung des Verfahrens gemäss dem Oberbegriff der unabhängigen Ansprüche.

**Stand der Technik**

Transformatoren in Verbindung mit ansteuerbaren Spannungsquellen, insbesondere als Spannungsumrichter ausgeführte ansteuerbare Spannungsquellen werden heute in einer Fülle von leistungselektronischen Schaltungen eingesetzt. Ein solcher Spannungsumrichter ist aus der US 5,309,346 bekannt und ist gängigerweise über den Transformator an ein elektrisches Wechselspannungsversorgungsnetz angeschlossen und speist beziehungsweise bezieht Wirk- und/oder Blindleistung, insbesondere zur Stabilisierung der Netzspannung des elektrischen Wechselspannungsversorgungsnetzes. Der Spannungsumrichter wird dabei mittels Ansteuersignalen einer üblicherweise vorgesehenen Ansteuerschaltung angesteuert. Weiterhin wird eine an das elektrische Wechselspannungsversorgungsnetz angeschlossene elektrische Last vom elektrischen Wechselspannungsversorgungsnetz und/oder vom Spannungsumrichter über den Transformator mit elektrischer Energie versorgt.

Im Falle eines gravierenden Fehlers im elektrischen Wechselspannungsversorgungsnetz, insbesondere durch einen Kurzschluss des elektrischen Wechselspannungsversorgungsnetzes, wird dieses mittels eines Trennschalters von der elektrischen Last getrennt. Der Spannungsumrichter muss dann über den Transformator die von der elektrischen Last benötigte Spannung und den entsprechenden Strom bereitstellen. Der vom Spannungsumrichter bereitzustellende Ausgangsstrom wird durch den Magnetisierungsstrom des Transformators und den Laststrom der elektrischen Last bestimmt. Im vorstehend beschriebenen Fehlerfall wird sich innerhalb weniger Mikrosekunden nach Auftreten des Kurzschlusses der Magnetisierungsstrom erhöhen, wodurch sich der Transformator aufmagnetisiert und gegebenenfalls in die Sättigung getrieben wird. Durch den hohen Magnetisierungsstrom kann der vom Spannungsumrichter bereitzustellende Ausgangsstrom, d.h. der Transformatorstrom über den maximal zulässigen Wert des Spannungsumrichters ansteigen, wodurch dann eine üblicherweise vorgesehene Schutzvorrichtung, insbesondere ein Trennschalter, bei Überschreiten des maximal zulässigen Wertes den Spannungsumrichter zum Schutz seiner Leistungshalbleiterschalter blockiert. Dadurch ist aber eine ausreichende Versorgung der elektrischen Last mit Energie innerhalb weniger zeitlicher Perioden der Netzspannung nicht gewährleistet.

Eine bekannte Möglichkeit, den Umrichterstrom unterhalb des maximal zulässigen Wertes für den vorstehend beschriebenen Fehlerfall einzustellen und damit zu gewährleisten, dass die elektrische Last mit elektrischer Energie versorgt wird, besteht in einer Überdimensionierung des Transformators, insbesondere des Eisenkerns der Hauptinduktivität. Dadurch lässt sich der Magnetisierungsstrom des Transformators während des vorstehend erläuterten Fehlerfalls effektiv begrenzen, so dass der Ausgangsstrom unterhalb des maximal zulässigen Wertes gehalten werden kann.

Problematisch bei der vorstehend beschriebenen Überdimensionierung des Transformators ist es, dass damit ein erhöhter Platzbedarf und ein Mehraufwand an Material einher geht, so dass durch die Überdimensionierung erhebliche Kosten entstehen.

**Darstellung der Erfindung**

Aufgabe der Erfindung ist es deshalb, ein Verfahren zum Betrieb eines Transformators an einer ansteuerbaren Spannungsquelle anzugeben, welches die Versorgung einer von einem elektrischen Wechselspannungsversorgungsnetz gespeisten elektrischen Last bei einem auftretenden Fehler des elektrischen Wechselspannungsversorgungsnetzes mittels der Spannungsquelle über den Transformator innerhalb kurzer Zeit ermöglicht. Ferner ist eine Vorrichtung anzugeben, mit der das Verfahren in besonders einfacher Weise durchgeführt wird. Diese Aufgabe wird durch die Merkmale des Anspruchs 1 und 11 gelöst. In den Unteransprüchen sind vorteilhafte Weiterbildungen der Erfindung angegeben.

Beim erfindungsgemässen Verfahren zum Betrieb eines Transformators an einer ansteuerbaren Spannungsquelle wird die Spannungsquelle derart angesteuert, dass sie Wirkleistung und/oder Blindleistung über den Transformator in ein elektrisches Wechselspannungsversorgungsnetz einspeist, wobei ein Ausgangsstrom der Spannungsquelle auf einen maximal zulässigen Wert hin überwacht wird. Erfindungsgemäss wird eine am Transformator anliegende Transformatorspannung und der magnetische Fluss des Transformators fortlaufend ermittelt. Bei Überschreiten des maximal zulässigen Wertes des Ausgangsstromes, d.h. bei Auftreten eines Fehlers des elektrischen Wechselspannungsversorgungsnetzes, insbesondere bei Auftreten eines Kurzschlusses, wird die Spannungsquelle derart angesteuert, dass eine Trennung der Spannungsquelle vom Transformator erfolgt, wobei vorzugsweise Leistungshalbleiterschalter der Spannungsquelle blockiert werden. Dadurch kann im vorstehend erwähnten Fehlerfall vorteilhaft verhindert werden, dass die Spannungsquelle durch einen zu liefernden, jedoch durch den Fehlerfall bedingten über einem maximal zulässigen Wert liegenden Ausgangsstrom belastet wird und Bauteile der Spannungsquelle, insbesondere Leistungshalbleiterschalter, beschädigt oder gar zerstört werden. Weiterhin kann auf einen gängigerweise vorgesehenen Trennschalter zu Abtrennung der Spannungsquelle verzichtet werden.

Desweiteren wird erfindungsgemäss auf ein Startsignal hin eine Ausgangsspannung der Spannungsquelle in Abhängigkeit einer vor dem Überschreiten des maximal zulässigen Wertes des Ausgangsstromes zuletzt ermittelten Transformatorspannung und eines vor dem Überschreiten des maximal zulässigen Wertes des Ausgangsstromes zuletzt ermittelten ersten magnetischen Flusses und eines zum Zeitpunkt des Startsignals ermittelten zweiten magnetischen Flusses gebildet. Die Spannungsquelle wird daraufhin derart angesteuert, dass die Ausgangsspannung ab einem einstellbaren Schaltzeitpunkt für eine einstellbare Zeitdauer an den Transformator angelegt wird. Die gebildete Ausgangsspannung stellt einen Starwert dar, so dass der im Fehlerfall teilentmagnetisierte oder im wesentlichen vollständig entmagnetisierte Transformator auf seine ursprüngliche Magnetisierung, d.h. auf seinen vor dem Fehlerfall bekannten magnetischen Fluss geführt werden kann. Durch das Anlegen der gebildeten Ausgangsspannung an den Transformator ab dem einstellbaren Schaltzeitpunkt für die einstellbare Zeitdauer baut sich der magnetische Fluss bis auf seinen vor dem Fehlerfall bekannten Wert, d.h. bis auf seine vor dem Fehlerfall bekannte Magnetisierung vorteilhaft schnellstmöglich auf, ohne dass dabei der maximal zulässige Wert des Ausgangsstromes der Spannungsquelle überschritten wird. Hierdurch ist gewährleistet, dass die Versorgung der elektrischen Last durch die Spannungsquelle über den Transformator bei einem vorstehend beschriebenen Fehler des elektrischen Wechselspannungsversorgungsnetzes innerhalb kurzer Zeit erfolgen kann. Vorteilhaft ist das erfindungsgemässe Verfahren bei teilentmagnetisierten oder im wesentlichen vollständig entmagnetisierten Transformatoren allgemein anwendbar und somit nicht auf den vorstehend beschriebenen Fehlerfall beschränkt. Darüber hinaus erlaubt das erfindungsgemässe Verfahren ein schnellstmögliches und transientenfreies Zuschalten des Transformators mittels der Spannungsquelle.

Die erfindungsgemässe Vorrichtung zur Durchführung des Verfahren zum Betrieb eines Transformators an einer ansteuerbaren Spannungsquelle weist eine der Ansteuerung der Spannungsquelle dienende Ansteuereinrichtung auf, wobei die Spannungsquelle entsprechend der Ansteuerung eine Ausgangsspannung zur Einspeisung von Wirkleistung und/oder Blindleistung über den Transformator in das elektrische Wechselspannungsversorgungsnetz erzeugt. Ferner ist erfindungsgemäss eine erste Überwachungseinrichtung zur Überwachung des Ausgangsstromes der Spannungsquelle auf einen maximal zulässigen Wert hin vorgesehen, die mit der Ansteuereinrichtung eingangsseitig verbunden ist, wobei die Ansteuereinrichtung bei Überschreiten des maximal zulässigen Wertes des Ausgangsstromes die Spannungsquelle derart angesteuert, dass eine Trennung der Spannungsquelle vom Transformator erfolgt, vorzugsweise durch Blockieren der Leistungshalbleiterschalter der Spannungsquelle. Erfindungsgemäss sind desweiteren erste Mittel zur fortlaufenden Ermittlung der am Transformator anliegenden Transformatorspannung vorgesehen, sowie ein Referenzsignalgenerator, der zweite Mittel zur fortlaufenden Ermittlung des magnetischen Flusses des Transformators aufweist und eingangsseitig mit den ersten Mitteln und ausgangsseitig mit der Ansteuereinrichtung verbunden ist. Der Referenzsignalgenerator ist vorteilhaft derart ausgebildet ist, dass auf das dem Referenzsignalgenerator zugeführte Startsignal hin ein der Ausgangsspannung entsprechendes Ausgangsspannungsreferenzsignal in Abhängigkeit der vor dem Überschreiten des maximal zulässigen Wertes des Ausgangsstromes zuletzt ermittelten Transformatorspannung und des ersten magnetischen Flusses und des zweiten magnetischen Flusses gebildet wird. Der Referenzsignalgenerator weist darüber hinaus eine Freigabeschalteinrichtung auf, der das Ausgangsspannungsreferenzsignal, ein einstellbarer Schaltzeitpunkt und eine einstellbare Zeitdauer zur Freigabe des Ausgangsspannungsreferenzsignals am Ausgang des Referenzsignalgenerators zugeführt sind. Mittels der Vorrichtung nach der Erfindung ist es somit besonders einfach das erfindungsgemässe Verfahren zum Betrieb eines Transformators an einer ansteuerbaren Spannungsquelle auszuführen, wobei die Vorrichtung ferner sehr einfach und kostengünstig realisierbar ist, da der Schaltungsaufwand äusserst gering gehalten werden kann und zudem nur eine geringe Anzahl an Bauelementen für den Aufbau benötigt wird.

Diese und weitere Aufgaben, Vorteile und Merkmale der vorliegenden Erfindung werden aus der nachfolgenden detaillierten Beschreibung eines bevorzugten Ausführungsbeispiels der Erfindung in Verbindung mit der Zeichnung offensichtlich.

**Kurze Beschreibung der Zeichnungen**

Es zeigen:

Fig. 1 eine Ausführungsform einer erfindungsgemässen Vorrichtung zur Durchführung des Verfahren zum Betrieb eines Transformators an einer ansteuerbaren Spannungsquelle,

Fig. 2 eine Ausführungsform eines erfindungsgemässen Referenzsignalgenerators,

Fig. 3a, b ,c Signalverläufe am Transformator bei dessen Betrieb, insbesondere nach einem Fehlerfall, für eine Differenzpha-

senlage im Intervall $0° < \psi_D < 180°$,

Fig. 4a, b ,c     Signalverläufe am Transformator bei dessen Betrieb, insbesondere nach einem Fehlerfall, für eine Differenzphasenlage $\psi_D$ im Intervall $-180° < \psi_D < 0°$ und

Fig. 5a, b ,c     Signalverläufe am Transformator bei dessen Betrieb, insbesondere nach einem Fehlerfall, für einen Amplitudenwert $|\phi_2|$ eines zum Zeitpunkt eines Startsignals $S_S$ ermittelten magnetischen Flusses $\phi_2$ im wesentlichen gleich Null.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebene Ausführungsform steht beispielhaft für den Erfindungsgegenstand und hat keine beschränkende Wirkung.

**Wege zur Ausführung der Erfindung**

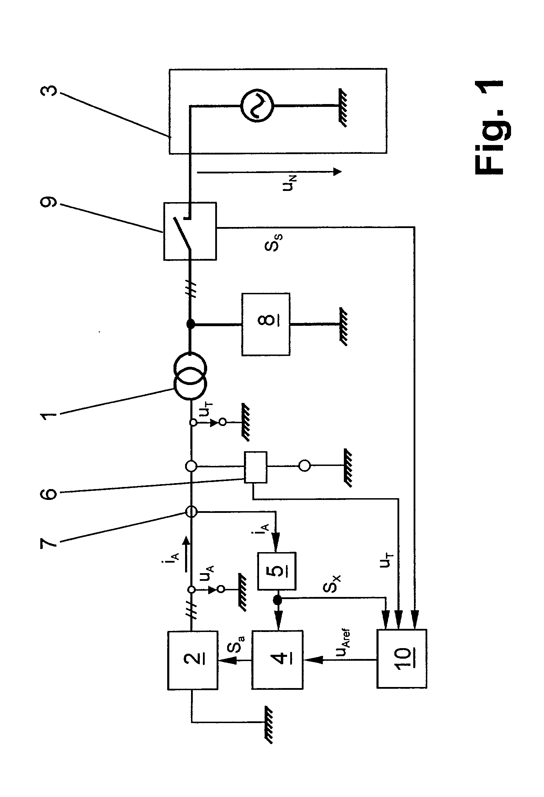

In Fig. 1 ist eine Ausführungsform einer erfindungsgemässen Vorrichtung zur Durchführung des Verfahren zum Betrieb eines Transformators 1 an einer ansteuerbaren Spannungsquelle 2. Die Spannungsquelle 2 weist insbesondere einen der Übersichtlichkeit halber nicht näher ausgeführten Umrichter auf, der mittels Ansteuersignalen $S_a$ einer Ansteuereinrichtung 4 angesteuert wird. Entsprechend der Ansteuerung erzeugt die Spannungsquelle 2 eine Ausgangsspannung $u_A$ zur Einspeisung von Wirkleistung und/oder Blindleistung über den Transformator in ein elektrisches, insbesondere dreiphasiges Wechselspannungsversorgungsnetz 3, wobei ein Ausgangsstrom $i_A$ der Spannungsquelle 2 auf einen maximal zulässigen Wert $i_{Amax}$ hin überwacht wird. Gemäss Fig. 1 ist das elektrische Wechselspannungsversorgungsnetz 3 über einen Netzschalter 9 mit einer zu speisenden elektrischen Last 8 verbunden, wobei die elektrische Last 8 zusätzlich mit dem Transformator 1 verbunden ist.

Beim erfindungsgemässen Verfahren zum Betrieb des Transformators 1 an der ansteuerbaren Spannungsquelle 2 wird eine am Transformator 1 anliegende Transformatorspannung $u_T$, insbesondere durch Messung, fortlaufend ermittelt. Ferner wird der magnetische Fluss $\phi$ des Transformators 1, fortlaufend ermittelt, wobei die Ermittlung vorzugsweise aus der Transformatorspannung $u_T$ erfolgt. Bei dem Verfahren nach der Erfindung wird weiterhin bei Überschreiten des maximal zulässigen Wertes $i_{Amax}$ des Ausgangsstromes $i_A$ die Spannungsquelle 2 derart angesteuert, dass diese vom Transformator 1 getrennt wird. Ein solches Überschreiten des maximal zulässigen Wertes $i_{Amax}$ des Ausgangsstromes $i_A$ tritt beispielsweise bei einem Fehler des elektrischen Wechselspannungsversorgungsnetzes 3, insbesondere bei einem Kurzschluss des elektrischen Wechselspannungsversorgungsnetzes 3, auf. Dadurch kann vorteilhaft verhindert werden, dass die Spannungsquelle 2 durch einen zu liefernden, jedoch durch den Fehlerfall bedingten, über dem maximal zulässigen Wert $i_{Amax}$ liegenden Ausgangsstrom $i_A$ belastet, beschädigt oder gar zerstört wird.

Weiterhin wird erfindungsgemäss auf ein Startsignal $S_S$ hin, bei welchem es sich vorzugsweise um ein Bestätigungssignal des im vorstehend beschriebenen Fehlerfall zu öffnenden Netzschalters 9 handelt, eine Ausgangsspannung $u_A$ in Abhängigkeit einer vor dem Überschreiten des maximal zulässigen Wertes $i_{Amax}$ des Ausgangsstromes $i_A$ zuletzt ermittelten Transformatorspannung $u_{Tx}$ und eines vor dem Überschreiten des maximal zulässigen Wertes $i_{Amax}$ des Ausgangsstromes $i_A$ zuletzt ermittelten ersten magnetischen Flusses $\phi_1$ und eines zum Zeitpunkt des Startsignals $S_S$ ermittelten zweiten magnetischen Flusses $\phi_2$ gebildet. Der erste magnetische Fluss $\phi_1$ wird vorzugsweise aus der vor dem Überschreiten des maximal zulässigen Wertes $i_{Amax}$ des Ausgangsstromes $i_A$ zuletzt ermittelten Transformatorspannung $u_{TX}$ gebildet, und der zweite magnetische Fluss $\phi_2$ wird aus einer zum Zeitpunkt des Startsignals $S_S$ ermittelten Transformatorspannung $u_{TS}$ gebildet. Die Bildung es ersten und zweiten magnetischen Flusses $\phi_1$, $\phi_2$ erfolgt vorteilhaft durch Integration der vor dem Überschreiten des maximal zulässigen Wertes $i_{Amax}$ des Ausgangsstromes $i_A$ zuletzt ermittelten Transformatorspannung $u_{TX}$ für den ersten magnetischen Fluss $\phi_1$ beziehungsweise durch Integration der zum Zeitpunkt des Startsignals $S_S$ ermittelten Transformatorspannung $u_{TS}$ für den zweiten magnetischen Fluss $\phi_2$. Dadurch kann vorteilhaft auf eine Messeinrichtung zur Ermittlung des magnetischen Flusses $\phi$ des Transformators 1 verzichtet werden.

Darüber hinaus wird die Spannungsquelle 2 erfindungsgemäss derart angesteuert, dass die gebildete Ausgangsspannung $u_A$ ab einem einstellbaren Schaltzeitpunkt $t_0$ für eine einstellbare Zeitdauer $T_0$ an den Transformator 1 angelegt wird. Die gebildete Ausgangsspannung $u_A$ stellt einen Starwert dar, so dass der im Fehlerfall teilentmagnetisierte oder im wesentlichen vollständig entmagnetisierte Transformator 1 auf seine ursprüngliche Magnetisierung, d.h. auf seinen vor dem Fehlerfall bekannten magnetischen Fluss $\phi_1$ geführt werden kann. Durch das Anlegen der gebildeten Ausgangsspannung $u_A$ an den Transformator 1 ab dem einstellbaren Schaltzeitpunkt $t_0$, der einen Startzeitpunkt darstellt, für die einstellbare Zeitdauer $T_0$ baut sich der magnetische Fluss $\phi$ bis auf seinen vor dem Fehlerfall bekannten Wert $\phi_1$ schnellstmöglich auf, ohne dass dabei der maximal zulässige Wert $i_{Amax}$ des Ausgangsstromes $i_A$ der Spannungsquelle 2, durch Sättigungserscheinungen des Transformators 1 hervorgerufen, überschritten wird. Die Spannungsquelle 2 kann dadurch die elektrischen Last 8 über den Transformator 1 bei einem vorstehend beschriebenen Fehler des elektrischen Wechselspannungsversorgungsnetzes 3 innerhalb kurzer Zeit versorgen, ohne dass Bauteile der Spannungsquelle 2, insbesondere Leistungshalbleiterschalter, bei der Versorgung der elektrischen Last 8 zu stark belastet, beschädigt oder gar zerstört werden.

Nachfolgend wird die Bildung der Ausgangsspannung $u_A$ für unterschiedliche Fälle detailliert beschrieben. Nach dem erfindungsgemässen Verfahren wird zur Bildung der Ausgangsspannung $u_A$ zunächst eine Phasenlage $\psi_1$ des ersten magnetischen Flusses $\phi_1$ und eine Phasenlage $\psi_2$ des zweiten magnetischen Flusses $\phi_2$ ermittelt und eine Differenzphasenlage $\psi_D$ mittels Differenzbildung aus der Phasenlage $\psi_1$ des ersten magnetischen Flusses $\phi_1$ und aus der Phasenlage $\psi_2$ des zweiten magnetischen Flusses $\phi_2$ gebildet. Desweiteren wird für einen Amplitudenwert $|\phi_2|$ des zweiten magnetischen Flusses $\phi_2$ im wesentlichen grösser Null und für eine Differenzphasenlage $\psi_D$ im wesentlichen im Intervall $0° < \psi_D < 180°$ als einstellbarer Schaltzeitpunkt $t_0$ das Erreichen der Differenzphasenlage $\psi_D$ von im wesentlichen $180°$ gewählt, wobei die Ausgangsspannung $u_A$ vorzugsweise nach Massgabe der Formel

$$u_A = u_{TX} \cdot \frac{1 - \frac{|\Phi_2|}{|\Phi_1|}}{2}$$

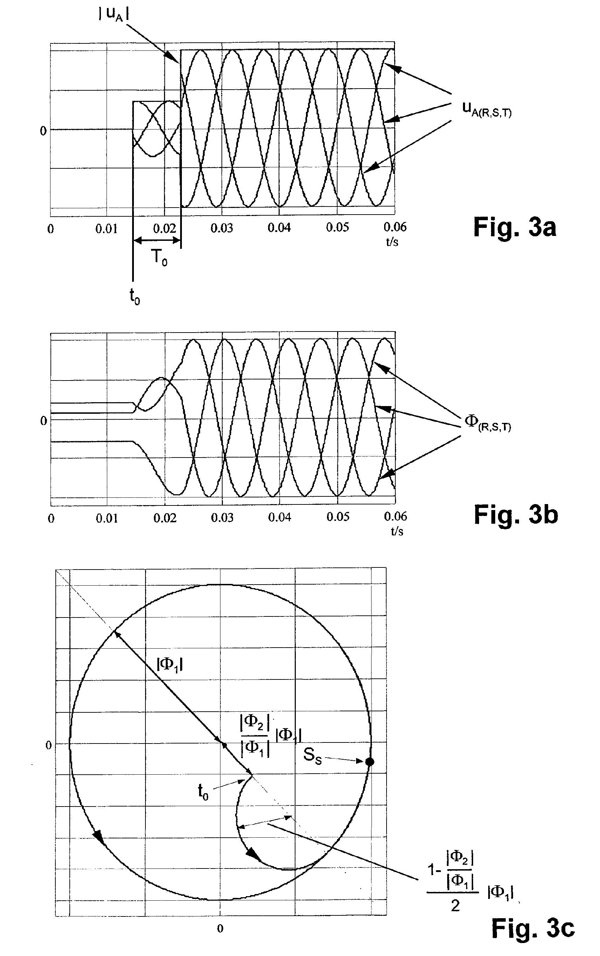

gebildet wird. In den Fig. 3a, b, c sind Signalverläufe am Transformator 1 bei dessen Betrieb, insbesondere nach einem Fehlerfall, für die Differenzphasenlage $\psi_D$ im Intervall $0° < \psi_D < 180°$ und für einen Amplitudenwert $|\phi_2|$ des zweiten magnetischen Flusses $\phi_2$ im wesentlichen grösser Null, gezeigt. Insbesondere in Fig. 3c, welche eine Darstellung der magnetischen Flussverläufe in eine Ebene transformiert zeigt, ist dargestellt, dass sich der magnetische Fluss $\phi$ am Transformator 1 zum Zeitpunkt $t_0$, d.h. zum Startzeitpunkt durch Anlegen der nach der vorstehenden Formel berechneten Ausgangsspannung $u_A$ an den Transformator 1 aufbaut, wobei sich ein Amplitudenwert $|\phi|$ des magnetischen Flusses $\phi$ wie

$$\text{folgt } |\Phi| = \frac{1 - \frac{|\Phi_2|}{|\Phi_1|}}{2} |\Phi_1|$$

ergibt. Die Ausgangsspannung $u_A$ wird, wie bereits erwähnt, für eine einstellbare Zeitdauer $T_0$ an den Transformator 1 gelegt, wobei es sich als sehr vorteilhaft erwiesen hat, dass als einstellbare Zeitdauer $T_0$ im wesentlichen eine halbe Periodendauer $T_N$ einer Netzwechselspannung $u_N$ des elektrischen Wechselspannungsversorgungsnetzes 3 gewählt wird. Gemäss Fig.

3c erreicht der magnetische Fluss $\phi$ des Transformators 1 den Wert $|\phi_1|$ im wesentlichen bei Ablauf dieser Zeitdauer $T_0$, der, wie bereits geschildert, dem Amplitudenwert $|\phi_1|$ des vor dem Überschreiten des maximal zulässigen Wertes $i_{Amax}$ des Ausgangsstromes $i_A$ zuletzt ermittelten ersten magnetischen Flusses $\phi_1$ entspricht. Vorzugsweise wird die Spannungsquelle 2 nach Ablauf der einstellbaren Zeitdauer $T_0$ derart angesteuert, dass als Ausgangsspannung $u_A$ der Spannungsquelle 2 die vor dem Überschreiten des maximal zulässigen Wertes $i_{Amax}$ des Ausgangsstromes $i_A$ zuletzt ermittelte Transformatorspannung $u_{TX}$ an den Transformator 1 angelegt wird. Diese Massnahme bewirkt, dass der erste Fluss $\phi_1$ des Transformators 1 gehalten werden kann und die Versorgung der elektrischen Last 8 über den Transformator 1 bei einem vorstehend beschriebenen Fehler des elektrischen Wechselspannungsversorgungsnetzes 3 innerhalb kurzer Zeit erfolgt.

Fig. 3a zeigt ferner den zeitlichen Verlauf der Ausgangsspannung $u_A$, insbesondere für eine dreiphasige Ausgangsspannung $u_{A(R, S, T)}$ bei einem dreiphasig ausgebildeten elektrischen Wechselspannungsversorgungsnetz 3 mit den Phasen R, S, T, die in Fig. 1 der Übersichtlichkeit halber nicht dargestellt sind. Weiterhin ist in Fig. 3b der zeitliche Verlauf des magnetischen Flusses $\phi_{(R,S,T)}$ am Transformator 1, insbesondere bei einem dreiphasig ausgebildeten elektrischen Wechselspannungsversorgungsnetz 3 mit den Phasen R, S, T, gezeigt.

Erfindungsgemäss wird für eine Differenzphasenlage $\psi_D$ im wesentlichen im Intervall $-180° < \psi_D < 0°$ als einstellbarer Schaltzeitpunkt $t_0$ das Erreichen der Differenzphasenlage $\psi_D$ von im wesentlichen $0°$ gewählt, wobei die Ausgangsspannung $u_A$ vorzugsweise nach Massgabe der Formel

$$u_A = u_{TX} \cdot \frac{1 + \frac{|\Phi_2|}{|\Phi_1|}}{2}$$

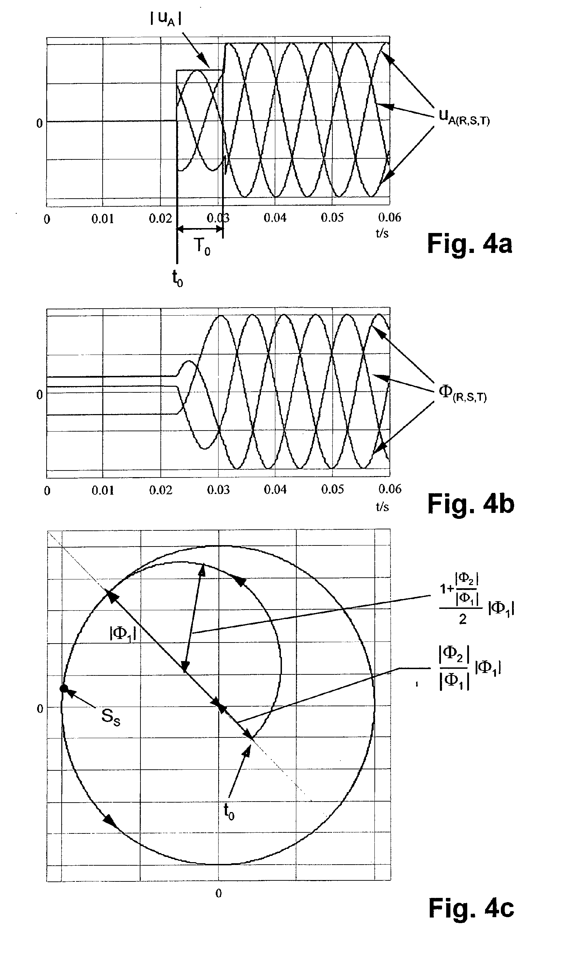

gebildet wird. In den Fig. 4a, b, c sind Signalverläufe am Transformator 1 bei dessen Betrieb, insbesondere nach einem Fehlerfall, für die Differenzphasenlage $\psi_D$ im $-180° < \psi_D < 0°$ und für einen Amplitudenwert $|\phi_2|$ des zweiten magnetischen Flusses $\phi_2$ im wesentlichen grösser Null, gezeigt. Insbesondere in Fig. 4c, welche eine Darstellung der magnetischen Flussverläufe in eine Ebene transformiert zeigt, ist gezeigt, dass sich der magnetische Fluss $\phi$ am Transformator 1 zum Zeitpunkt $t_0$, d.h. zum Startzeitpunkt durch Anlegen der nach der vorstehenden Formel berechneten Ausgangsspannung $u_A$ an den Transformator 1 aufbaut, wobei sich der Amplitudenwert $|\phi|$ des magnetischen Flusses $\phi$ wie folgt

$$|\Phi| = \frac{1+\frac{|\Phi_2|}{|\Phi_1|}}{2}|\Phi_1|$$

ergibt. Die Ausgangsspannung $u_A$ wird, wie bereits erwähnt, für eine einstellbare Zeitdauer $T_0$ an den Transformator 1 gelegt, wobei es sich auch in diesem Fall als sehr vorteilhaft erwiesen hat, dass als einstellbare Zeitdauer $T_0$ im wesentlichen eine halbe Periodendauer $T_N$ der Netzwechselspannung $u_N$ des elektrischen Wechselspannungsversorgungsnetzes 3 gewählt wird. Gemäss Fig. 4c erreicht der magnetische Fluss $\phi$ des Transformators 1 den Wert $|\phi_1|$ im wesentlichen bei Ablauf dieser Zeitdauer $T_0$, der, wie bereits geschildert, dem Amplitudenwert $|\phi_1|$ des vor dem Überschreiten des maximal zulässigen Wertes $i_{Amax}$ des Ausgangsstromes $i_A$ zuletzt ermittelten ersten magnetischen Flusses $\phi_1$ entspricht. Die Spannungsquelle 2 wird vorzugsweise nach Ablauf der einstellbaren Zeitdauer $T_0$ derart angesteuert, dass als Ausgangsspannung $u_A$ der Spannungsquelle 2 die vor dem Überschreiten des maximal zulässigen Wertes $i_{Amax}$ des Ausgangsstromes $i_A$ zuletzt ermittelte Transformatorspannung $u_{TX}$ an den Transformator 1 angelegt wird. Auch in diesem Fall wird damit bewirkt, dass der erste Fluss $\phi_1$ des Transformators 1 gehalten werden kann und die Versorgung der elektrischen Last 8 über den Transformator 1 bei einem vorstehend beschriebenen Fehler des elektrischen Wechselspannungsversorgungsnetzes 3 innerhalb kurzer Zeit erfolgt.

Fig. 4a zeigt ferner den zeitlichen Verlauf der Ausgangsspannung $u_A$, insbesondere für eine dreiphasige Ausgangsspannung $u_{A(R, S, T)}$ bei einem dreiphasig ausgebildeten elektrischen Wechselspannungsversorgungsnetz 3 mit den Phasen R, S, T. Weiterhin ist in Fig. 4b der zeitliche Verlauf des magnetischen Flusses $\phi_{(R, S, T)}$ am Transformator 1, insbesondere bei einem dreiphasig ausgebildeten elektrischen Wechselspannungsversorgungsnetz 3 mit den Phasen R, S, T, gezeigt.

Ist der Transformator 1 nahezu vollständig aufgrund des vorstehend beschriebenen Fehlerfalls entmagnetisiert worden, so äussert sich dies dadurch, dass der Amplitudenwert $|\phi_2|$ des zweiten magnetischen Flusses $\phi_2$ nach Auftreten des Fehlers im wesentlichen gleich Null ist. Für einen solchen Amplitudenwert $|\phi_2|$ des zweiten magnetischen Flusses $\phi_2$ im wesentlichen gleich Null wird erfindungsgemäss als einstellbarer Schaltzeitpunkt $t_0$ das Auftreten des Startsignals $S_S$ gewählt, wobei die Ausgangsspannung $u_A$ nach Massgabe der Formel

$$u_A = u_{TX} \cdot \frac{1}{2}$$

gebildet wird.

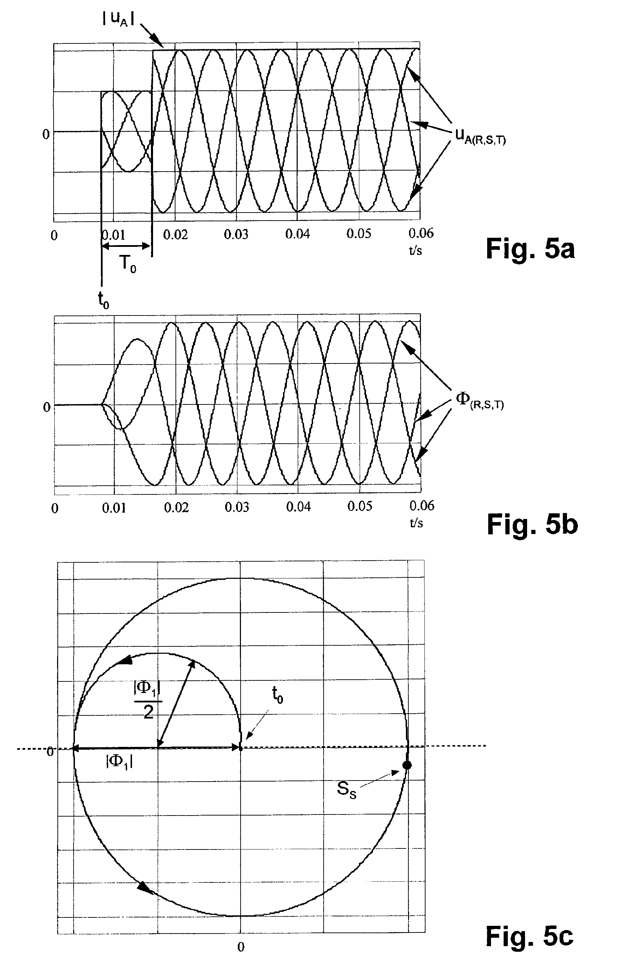

In den Fig. 5a, b, c sind Signalverläufe am Transformator 1 bei dessen Betrieb, insbesondere nach einem Fehlerfall, für einen Amplitudenwert $|\phi_2|$ eines zum Zeitpunkt eines Startsignals $S_S$ ermittelten magnetischen Flusses $\phi_2$ im wesentlichen gleich Null dargestellt. In Fig. 5c, welche eine Darstellung der magnetischen Flussverläufe in eine Ebene transformiert zeigt, ist dargestellt, dass sich der magnetische Fluss $\phi$ am Transformator 1 zum Zeitpunkt $t_0$, d.h. zum Startzeitpunkt durch Anlegen der nach der vorstehenden Formel berechneten Ausgangsspannung $u_A$ an den Transformator 1 aufbaut, wobei sich der Amplitudenwert $|\phi|$ des magnetischen Flusses $\phi$ wie folgt

$$|\Phi| = \frac{|\Phi_1|}{2}$$

ergibt. Die Ausgangsspannung $u_A$ wird auch in diesem Fall für eine einstellbare Zeitdauer $T_0$ an den Transformator 1 gelegt, wobei es sich auch hier als vorteilhaft erwiesen hat, dass als einstellbare Zeitdauer $T_0$ im wesentlichen eine halbe Periodendauer $T_N$ der Netzwechselspannung $u_N$ des elektrischen Wechselspannungsversorgungsnetzes 3 gewählt wird.

Gemäss Fig. 5c erreicht der magnetische Fluss $\phi$ des Transformators 1 den Wert $|\phi_1|$ im wesentlichen bei Ablauf dieser Zeitdauer $T_0$, der, wie bereits geschildert, dem Amplitudenwert $|\phi_1|$ des vor dem Überschreiten des maximal zulässigen Wertes $i_{Amax}$ des Ausgangsstromes $i_A$ zuletzt ermittelten ersten magnetischen Flusses $\phi_1$ entspricht. Die Spannungsquelle 2 wird vorzugsweise nach Ablauf der einstellbaren Zeitdauer $T_0$ derart angesteuert, dass als Ausgangsspannung $u_A$ der Spannungsquelle 2 die vor dem Überschreiten des maximal zulässigen Wertes $i_{Amax}$ des Ausgangsstromes $i_A$ zuletzt ermittelte Transformatorspannung $u_{TX}$ an den Transformator 1 angelegt wird. Auch in diesem Fall wird damit bewirkt, dass der erste Fluss $\phi_1$ des Transformators 1 gehalten werden kann und die Versorgung der elektrischen Last 8 über den Transformator 1 bei einem vorstehend beschriebenen Fehler des elektrischen Wechselspannungsversorgungsnetzes 3 innerhalb kurzer Zeit erfolgt.

Fig. 5a zeigt ferner den zeitlichen Verlauf der Ausgangsspannung $u_A$, insbesondere für eine dreiphasige Ausgangsspannung $U_{A(R, S, T)}$ bei einem dreiphasig ausgebildeten elektrischen Wechselspannungsversorgungsnetz 3 mit den Phasen R, S, T. Weiterhin ist in Fig. 5b der zeitliche Verlauf des magnetischen Flusses $\phi_{(R, S, T)}$ am Transformator 1, insbesondere bei einem dreiphasig ausgebildeten elektrischen Wechselspannungsversorgungsnetz 3 mit den Phasen R, S, T, gezeigt.

Mit dem vorstehend beschriebenen erfindungsgemässen Verfahren, insbesondere durch das Anlegen der gebildeten Ausgangsspannung $u_A$ an den Transformator 1 ab dem einstellbaren Schaltzeitpunkt $t_0$ für die einstellbare Zeitdauer $T_0$ baut sich der magne-

tische Fluss bis auf seinen vor dem Fehlerfall bekannten Wert vorteilhaft schnellstmöglich auf, ohne dass dabei der maximal zulässige Wert $i_{Amax}$ des Ausgangsstromes $i_A$ der Spannungsquelle 2 überschritten wird, wodurch gewährleistet ist, dass die Versorgung der elektrischen Last 8 durch die Spannungsquelle 2 über den Transformator 1 bei einem vorstehend beschriebenen Fehler des elektrischen Wechselspannungsversorgungsnetzes 3 innerhalb kurzer Zeit, insbesondere innerhalb einer Periodendauer $T_N$ der Netzwechselspannung $u_N$ des elektrischen Wechselspannungsversorgungsnetzes 3 beziehungsweise im besten Fall innerhalb einer halben Periodendauer $T_N$ erfolgen kann. Damit ist eine hohe Versorgungsqualität der elektrischen Last 8 gegeben, wobei durch die Möglichkeit der schnellen Versorgung mit der Spannungsquelle 2 über den Transformator 1 Schäden oder Zerstörung an der elektrischen Last 8, welche mit einem längeren Versorgungsausfall einher gehen können, zusätzlich verhindert werden können.

Das erfindungsgemässe Verfahren zum Betrieb des Transformators 1 an der ansteuerbaren Spannungsquelle 2 beschränkt sich nicht nur auf einen beispielhaft beschriebenen Transformator 1 an einem dreiphasigen elektrischen Wechselspannungsversorgungsnetz 3, sondern kann ebenso für einen mehrphasig ausgebildeten Transformator 1 im allgemeinen sowie für einen einphasig ausgeführten Transformator 1 eingesetzt werden. Vorteilhaft ist das erfindungsgemässe Verfahren weiterhin bei teilentmagnetisierten oder im wesentlichen vollständig entmagnetisierten Transformatoren allgemein anwendbar und somit nicht auf den vorstehend beschriebenen Fehlerfall beschränkt

Die erfindungsgemäss Vorrichtung zur Durchführung des Verfahrens weist gemäss der in Fig. 1 dargestellten Ausführungsform eine der Ansteuerung der Spannungsquelle 2 dienende Ansteuereinrichtung 4, wobei die Spannungsquelle 2 entsprechend der Ansteuerung mittels den Ansteuersignalen $S_a$ die Ausgangsspannung $u_A$ zur Einspeisung von Wirkleistung und/oder Blindleistung über den Transformator 1 in das elektrische Wechselspannungsversorgungsnetz 3 erzeugt. Erfindungsgemäss ist eine erste Überwachungseinrichtung 5 zur Überwachung des Ausgangsstromes $i_A$ der Spannungsquelle 2 auf einen maximal zulässigen Wert $i_{Amax}$ hin vorgesehen, die mit der Ansteuereinrichtung 4 eingangsseitig verbunden ist. Gemäss Fig. 1 sind weiterhin Strommessmittel 7 mit dem Eingang der ersten Überwachungseinrichtung 5 zur Zuführung eines dem Ausgangsstrom $i_A$ entsprechendes Signal verbunden, wobei die Strommessmittel 7 vorzugsweise einen Stromwandler zur Erzeugung eines solchen Signals aufweisen. Desweiteren erzeugt die erste Überwachungseinrichtung 5 an ihrem Ausgang bei Überschreiten des maximal zulässigen Wertes $i_{Amax}$ des Ausgangsstromes $i_A$ ein Überwachungssignal $S_x$, welches der Ansteuereinrichtung 4 über die Verbindung zugeführt ist. Die Ansteuereinrichtung 4 ist so ausgebildet, dass bei Überschreiten des maximal zulässigen Wertes $i_{Amax}$ des Ausgangsstromes $i_A$, d.h. bei Auftreten des Überwachungssignals $S_x$, die Spannungsquelle 2 durch entsprechende Ansteuerung vom Transformator 1 getrennt wird. Ein solcher Überstrom kann bei einem beim erfindungsgemässen Verfahren bereits beschriebenen Fehlerfall auftreten.

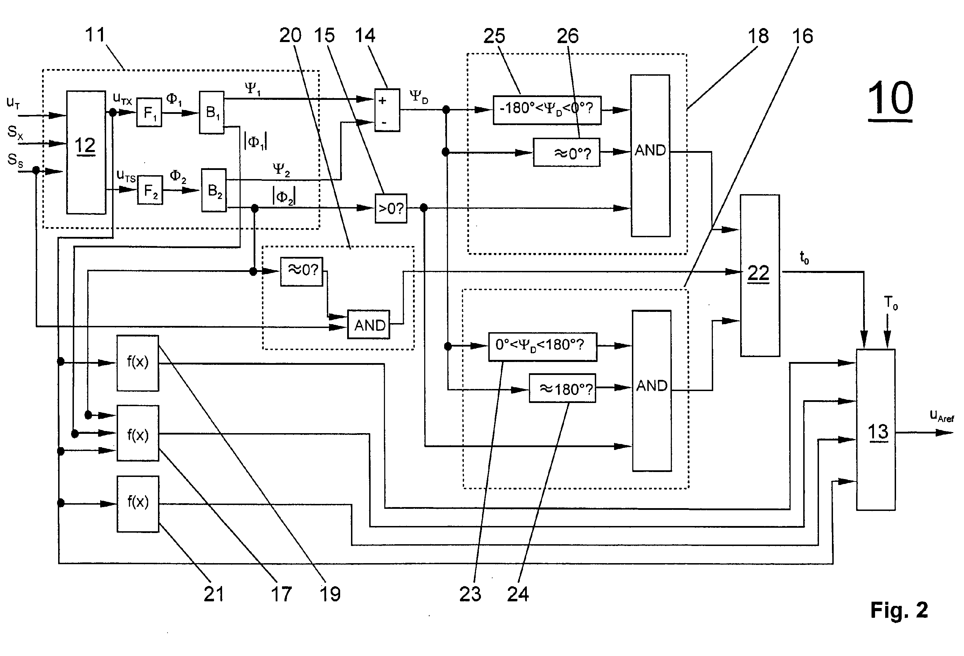

Gemäss Fig. 1 sind desweiteren erste Mittel 6 zur fortlaufenden Ermittlung der am Transformator 1 anliegenden Transformatorspannung $u_T$ und ein Referenzsignalgenerator 10 vorgesehen, der zweite Mittel 11 zur fortlaufenden Ermittlung des magnetischen Flusses $\phi$ des Transformators 1 aufweist und eingangsseitig mit den ersten Mitteln 6 und ausgangsseitig mit der Ansteuereinrichtung 4 verbunden ist. In Fig. 2 ist eine Ausführungsform des erfindungsgemässen Referenzsignalgenerators 10 dargestellt. Der Referenzsignalgenerator 10 ist gemäss Fig. 2 derart ausgebildet ist, dass auf das dem Referenzsignalgenerator 10 zugeführte Startsignal $S_S$ hin ein der Ausgangsspannung $u_A$ entsprechendes Ausgangsspannungsreferenzsignal $u_{Aref}$ in Abhängigkeit der vor dem Überschreiten des maximal zulässigen Wertes $i_{Amax}$ des Ausgangsstromes $i_A$ zuletzt ermittelten Transformatorspannung $u_{TX}$ und des vor dem Überschreiten des maximal zulässigen Wertes $i_{Amax}$ des Ausgangsstromes $i_A$ zuletzt ermittelten ersten magnetischen Flusses $\phi_1$ und des zum Zeitpunkt des Startsignals $S_S$ ermittelten zweiten magnetischen Flusses $\phi_2$ gebildet wird. Darüber hinaus weist der Referenzsignalgenerator 10 eine Freigabeschalteinrichtung 13 auf, der das Ausgangsspannungsreferenzsignal $U_{Aref}$, der einstellbarer Schaltzeitpunkt $t_0$ und eine einstellbare Zeitdauer $T_0$ zur Freigabe des Ausgangsspannungsreferenzsignals $u_{Aref}$ am Ausgang des Referenzsignalgenerators 10 zugeführt sind. Durch die Verbindung des Referenzsignalgenerators 10 mit dem Eingang der Ansteuereinrichtung 4 gemäss Fig. 1 ist das Ausgangsspannungsreferenzsignal $u_{Aref}$ der Ansteuereinrichtung 4 zugeführt, die aus dem Ausgangsspannungsreferenzsignal $u_{Aref}$ dann entsprechende und vorstehend bereits erwähnte Ansteuersignale $S_a$ zur Ansteuerung der Spannungsquelle 2 bildet. Mittels der Freigabeeinrichtung kann sichergestellt werden, dass das gebildete Ausgangsspannungsreferenzsignal $u_{Aref}$ ab dem Zeitpunkt $t_0$ für die Zeitdauer $T_0$ am Ausgang des Referenzsignalgenerators 10 freigegeben wird und somit ab dem Zeitpunkt $t_0$ für die Zeitdauer $T_0$ anliegt, so dass es der Ansteuereinrichtung 4 für die Bildung der Ansteuersignale $S_a$ für die Spannungsquelle 2 zur Verfügung steht. Wie bereits beim erfindungsgemässen Verfahren erwähnt, hat es sich als vorteilhaft erwiesen, dass als einstellbare Zeitdauer $T_0$ im wesentlichen eine halbe Periodendauer $T_N$ der Netzwechselspannung $u_N$ des elektrischen Wechselspannungsversorgungsnetzes 3 gewählt ist. Gemäss Fig. 2 ist der Freigabeschalteinrichtung 13 die vor dem Überschreiten des maximal zulässigen Wertes $i_{Amax}$ des Ausgangsstromes $i_A$ zuletzt ermittelte Transformatorspannung $u_{TX}$ zugeführt, wobei die Freigabeschalteinrichtung 13 vorzugsweise derart ausgebildet ist, dass nach Ablauf der einstellbaren Zeitdauer $T_0$ die zugeführte Transformatorspannung $u_{TX}$ als Ausgangsspannungsreferenzsignals $u_{Aref}$ am Ausgang des Referenzsignalgenerators 10 anliegt.

Nachfolgend wird der Referenzsignalgenerator 10 und dessen Funktionsweise, insbesondere die Bildung des Ausgangsspannungsreferenzsignals $u_{Aref}$ detailliert anhand von Fig. 2 beschrieben. Gemäss Fig. 2 ist den zweiten Mitteln 11 die Transformatorspannung $u_T$ zugeführt, wobei die zweiten Mittel 11 derart ausgebildet sind, dass der erste magnetische Fluss $\phi_1$ aus der vor dem Überschreiten des maximal zulässigen Wertes $i_{Amax}$ des Ausgangsstromes $i_A$ zuletzt ermittelten Transformatorspannung $u_{TX}$ gebildet wird und der zweite magnetische Fluss $\phi_2$ aus einer zum Zeitpunkt des Startsignals $S_S$ ermittelten Transformatorspannung $u_{TS}$ gebildet wird. Dazu weisen die zweiten Mittel 11 am Eingang eine Auswahleinrichtung 12 auf, der die Transformatorspannung $u_T$, das Startsignal $S_S$ und das Überwachungssignals $S_X$ zugeführt sind. Desweiteren wird die vor dem Überschreiten des maximal zulässigen Wertes $i_{Amax}$ des Ausgangsstromes $i_A$ zuletzt ermittelte Transformatorspannung $u_{TX}$ wird am Ausgang der zweiten Mittel 11 ausgegeben. Liegt das Überwachungssignal $S_X$ am Eingang der Auswahleinrichtung 12 an, so wird an einem Ausgang der Auswahleinrichtung 12 die vor dem Überschreiten des maximal zulässigen Wertes $i_{Amax}$ des Ausgangsstromes $i_A$ zuletzt ermittelten Transformatorspannung $u_{TX}$ ausgegeben. Liegt das Startsignal $S_S$ am Eingang der Auswahleinrichtung 12 an, so wird die zum Zeitpunkt des Startsignals $S_S$ ermittelte Transformatorspannung $u_{TS}$ am Ausgang der Auswahleinrichtung 12 ausgegeben. Danach wird durch Integration mittels Integratoren $F_1$, $F_2$ der erste magnetische Fluss $\phi_1$ aus der vor dem Überschreiten des maximal zulässigen Wertes $i_{Amax}$ des Ausgangsstromes $i_A$ zuletzt ermittelten Transformatorspannung $u_{TX}$ beziehungsweise der zweite magnetische Fluss $\phi_2$ aus der zum Zeitpunkt des Startsignals $S_S$ ermittelten Transformatorspannung $u_{TS}$ gebildet.

Weiterhin sind die zweiten Mittel 11 gemäss Fig. 2 derart ausgebildet ist, dass erfindungsgemäss die Phasenlage $\psi_1$ des ersten magnetischen Flusses $\phi_1$, der Amplitudenwert $|\phi_1|$ des ersten magnetischen Flusses $\phi_1$, die Phasenlage $\psi_2$ des zweiten magnetischen Flusses $\phi_2$ und ein Amplitudenwert $|\phi_2|$ des zweiten magnetischen Flusses $\phi_2$ gebildet werden und an deren Ausgang anliegen. Dazu weisen die zweiten Mittel 11 Phasen-Amplitudenwert-Bildner $B_1$, $B_2$ auf, welche jeweils aus dem ersten magnetischen Fluss $\phi_1$ die zugehörige Phasenlage $\psi_1$ des ersten magnetischen Flusses $\phi_1$ und den Amplitudenwert $|\phi_1|$ des ersten magnetischen Flusses $\phi_1$ beziehungsweise aus dem zweiten magnetischen Fluss $\phi_2$ die zugehörige Phasenlage $\psi_2$ des zweiten magnetischen Flusses $\phi_2$ und den Amplitudenwert $|\phi_2|$ des zweiten magnetischen Flusses $\phi_2$ bilden.

den.

Gemäss Fig. 2 umfasst der Referenzsignalgenerator 10 zudem einen Differenzbildner 14 zur Bildung einer Differenzphasenlage $\psi_D$ aus der Phasenlage $\psi_1$ des ersten magnetischen Flusses $\phi_1$ und aus der Phasenlage $\psi_2$ des zweiten magnetischen Flusses $\phi_2$, wobei der Differenzbildner 14 zum Zweck der Zuführung der Phasenlage $\psi_1$ des ersten magnetischen Flusses $\phi_1$ und der Phasenlage $\psi_2$ des zweiten magnetischen Flusses $\phi_2$ mit dem Ausgang der zweiten Mittel 11 verbunden ist. Vorzugsweise ist der Differenzbildner 14 als Subtrahierer ausgebildet. Darüber hinaus ist gemäss Fig. 2 eine zweite Überwachungseinrichtung 15 zur Überwachung des Amplitudenwertes $|\phi_2|$ des zweiten magnetischen Flusses $\phi_2$ auf einen Wert im wesentlichen grösser Null hin vorgesehen, wobei die zweite Überwachungseinrichtung 15 bei Zutreffen der vorstehend genannten Überwachungsbedingung ein entsprechendes Signal ausgibt. Zum Zweck der Zuführung des Amplitudenwertes $|\phi_2|$ des zweiten magnetischen Flusses $\phi_2$ ist die zweite Überwachungseinrichtung 15 eingangsseitig mit dem Ausgang der zweiten Mittel 11 verbunden. Die zweite Überwachungseinrichtung 15 und der Differenzbildner 14 ist mit dem Eingang einer dritten Überwachungseinrichtung 16 verbunden. Die dritte Überwachungseinrichtung 16 dient der Überwachung der Differenzphasenlage $\psi_D$ im wesentlichen im Intervall $0° < \psi_D < 180°$. Dazu weist die dritte Überwachungseinrichtung 16 einen ersten Vergleicher 23 auf, der die Differenzphasenlage $\psi_D$ im Intervall $0° < \psi_D < 180°$ überwacht und bei Zutreffen ein entsprechendes Signal ausgibt. Desweiteren ist ein zweiter Vergleicher 24 der dritten Überwachungseinrichtung 16 vorgesehen, der die Differenzphasenlage $\psi_D$ auf eine Lage von im wesentlichen $180°$ hin überwacht und bei Erreichen ein entsprechendes Signal ausgibt. Bei Erreichen der Differenzphasenlage $\psi_D$ von im wesentlichen $180°$ sowie bei Lage der Differenzphasenlage $\psi_D$ im Intervall $0° < \psi_D < 180°$ und bei einem Amplitudenwert $|\phi_2|$ des zweiten magnetischen Flusses $\phi_2$ im wesentlichen grösser Null, d.h. bei Ausgabe der entsprechenden Signale der zweiten Überwachungseinrichtung 15, des ersten Vergleichers 23 und des zweiten Vergleichers 24, wählt die dritte Überwachungseinrichtung 16 den Zeitpunkt des Erreichens der Differenzphasenlage $\psi_D$ von im wesentlichen $180°$ als einstellbaren Schaltzeitpunkt $t_0$. Dazu ist die dritte Überwachungseinrichtung 16 ausgangsseitig vorteilhaft mit einer Zeitbasis 22 verbunden, aus der die dritte Überwachungseinrichtung 16 den entsprechenden einstellbaren Schaltzeitpunkt $t_0$ bei Zutreffen der vorstehend genannten Bedingungen auswählt.

Ferner ist die zweite Überwachungseinrichtung 15 und der Differenzbildner 14 gemäss Fig. 2 mit dem Eingang einer vierten Überwachungseinrichtung 18 verbunden. Die vierte Überwachungseinrichtung 18 dient der Überwachung der Differenzphasenlage $\psi_D$ im wesentlichen im Intervall $-180° < \psi_D < 0°$. Dazu weist die vierte Überwachungseinrichtung 18 einen dritten Vergleicher 25 auf, der die Differenzphasenlage $\psi_D$ im Intervall -180° < $\psi_D$ < 0° überwacht und bei Zutreffen ein entsprechendes Signal ausgibt. Desweiteren ist ein vierter Vergleicher 26 der vierten Überwachungsrichtung 18 vorgesehen, der die Differenzphasenlage $\psi_D$ auf eine Lage von im wesentlichen 0° hin überwacht und bei Erreichen ein entsprechendes Signal ausgibt. Bei Erreichen Differenzphasenlage $\psi_D$ von im wesentlichen 0° sowie bei Lage Differenzphasenlage $\psi_D$ im Intervall -180° < $\psi_D$ < 0° und bei einem Amplitudenwert $|\phi_2|$ des zweiten magnetischen Flusses $\phi_2$ im wesentlichen grösser Null, d.h. bei Ausgabe der entsprechenden Signale der zweiten Überwachungseinrichtung 15, des dritten Vergleichers 25 und des vierten Vergleichers 26, wählt die vierte Überwachungseinrichtung 18 den Zeitpunkt des Erreichens der Differenzphasenlage $\psi_D$ von im wesentlichen 0° als einstellbaren Schaltzeitpunkt $t_0$. Die vierte Überwachungseinrichtung 18 ist dazu ausgangsseitig ebenfalls mit der Zeitbasis 22 verbunden, aus der die vierte Überwachungseinrichtung 18 den entsprechenden einstellbaren Schaltzeitpunkt $t_0$ bei Zutreffen der vorstehend genannten Bedingungen auswählt.

Ferner ist gemäss Fig. 2 eine fünfte Überwachungseinrichtung 20 zur Überwachung des Amplitudenwertes $|\phi_2|$ des zweiten magnetischen Flusses $\phi_2$ auf einen Wert im wesentlichen gleich Null hin vorgesehen, wobei die fünfte Überwachungseinrichtung zum Zweck der Zuführung des Amplitudenwertes $|\phi_2|$ des zweiten magnetischen Flusses $\phi_2$ eingangsseitig mit dem Ausgang der zweiten Mittel 11 verbunden ist. Die fünfte Überwachungseinrichtung 20 dient der Überwachung des Amplitudenwertes $|\phi_2|$ des zweiten magnetischen Flusses $\phi_2$ auf einen Wert von wesentlichen gleich Null hin, wobei bei Zutreffen der vorstehend genannten Überwachungsbedingung ein entsprechendes Signal ausgegeben wird. Die fünfte Überwachungseinrichtung 20 wählt daraufhin den Zeitpunkt des Auftretens des Amplitudenwertes $|\phi_2|$ des zweiten magnetischen Flusses $\phi_2$ von wesentlichen gleich Null als einstellbaren Schaltzeitpunkt $t_0$. Die fünfte Überwachungseinrichtung 20 ist dazu ausgangsseitig ebenfalls mit der Zeitbasis 22 verbunden, aus der die fünfte Überwachungseinrichtung 20 den entsprechenden einstellbaren Schaltzeitpunkt $t_0$ bei Zutreffen der vorstehend genannten Bedingung auswählt.

Ferner ist gemäss Fig. 2 eine erste Berechnungseinheit 17 zur Bildung des Ausgangsspannungsreferenzsignals $u_{Aref}$ vorgesehen, der die vor dem Überschreiten des maximal zulässigen Wertes $i_{Amax}$ des Ausgangsstromes $i_A$ zuletzt ermittelten Transformatorspannung $u_{TX}$ der zweiten Mittel 11, der Amplitudenwert $|\phi_1|$ des ersten magnetischen Flusses $\phi_1$ der zweiten Mittel 11 und der Amplitudenwert $|\phi_2|$ des zweiten magnetischen Flusses $\phi_2$ der zweiten Mittel 11 eingangsseitig zugeführt sind. Vorzugsweise berechnet die erste Berechnungseinheit 17 das Ausgangsspannungsreferenzsignal $u_{Aref}$ derart, dass die Ausgangsspannung $u_A$ nach Massgabe der Formel

$$u_A = u_{TX} \cdot \frac{1 - \dfrac{|\Phi_2|}{|\Phi_1|}}{2}$$

gebildet wird. Die erste Berechnungseinheit 17 ist ausgangsseitig mit dem Eingang der Freigabeschalteinrichtung 13 zum Zwecke der Zuführung des vorstehend genannten Ausgangsspannungsreferenzsignals $u_{Aref}$ verbunden. Dieses Ausgangsspannungsreferenzsignal $u_{Aref}$ wird dann ab dem zugehörigen gewählten Zeitpunkt $t_0$, d.h. in diesem Fall der Zeitpunkt des Erreichens der Differenzphasenlage $\psi_D$ von im wesentlichen 180°, für die Zeitdauer $T_0$ am Ausgang des Referenzsignalgenerators 10 von der Freigabeschalteinrichtung 13 freigegeben und liegt dann am Ausgang des Referenzsignalgenerators 10 ab diesem Zeitpunkt $t_0$ für die Zeitdauer $T_0$ an, so dass es der Ansteuereinrichtung 4 für die Bildung der Ansteuersignale $S_a$ für die Spannungsquelle 2 zur Verfügung steht.

Weiterhin ist gemäss Fig. 2 eine zweite Berechnungseinheit 19 zur Bildung des Ausgangsspannungsreferenzsignals $u_{Aref}$ vorgesehen, der die vor dem Überschreiten des maximal zulässigen Wertes $i_{Amax}$ des Ausgangsstromes $i_A$ zuletzt ermittelten Transformatorspannung $u_{TX}$ der zweiten Mittel 11, der Amplitudenwert $|\phi_1|$ des ersten magnetischen Flusses $\phi_1$ der zweiten Mittel 11 und der Amplitudenwert $|\phi_2|$ des zweiten magnetischen Flusses $\phi_2$ der zweiten Mittel 11 eingangsseitig zugeführt sind. Die zweite Berechnungseinheit 19 berechnet das Ausgangsspannungsreferenzsignal $u_{Aref}$ vorzugsweise derart, dass die Ausgangsspannung $u_A$ nach Massgabe der Formel

$$u_A = u_{TX} \cdot \frac{1 + \dfrac{|\Phi_2|}{|\Phi_1|}}{2}$$

gebildet wird. Die zweite Berechnungseinheit 19 ist wie die erste Berechnungseinheit 17 ausgangsseitig mit dem Eingang der Freigabeschalteinrichtung 13 zum Zwecke der Zuführung des vorstehend genannten Ausgangsspannungsreferenzsignals $u_{Aref}$ verbunden. Dieses Ausgangsspannungsreferenzsignal $u_{Aref}$ wird dann ab dem zugehörigen gewählten Zeitpunkt $t_0$, d.h. in diesem Fall der Zeitpunkt des Erreichens der Differenzphasenlage $\psi_D$ von im wesentlichen 0°, für die Zeitdauer $T_0$ am Ausgang des Referenzsignalgenerators 10 von der Freigabeschalteinrichtung 13 freigegeben und liegt dann am Ausgang des Referenzsignalgenerators 10 ab diesem Zeitpunkt $t_0$ für die Zeitdauer $T_0$ an, so dass es der Ansteuereinrichtung 4 für die Bildung der Ansteuersignale $S_a$ für die Spannungsquelle 2 zur Verfügung steht.

Darüber hinaus ist eine dritte Berechnungseinheit 21 gemäss Fig. 2 zur Bildung des Ausgangsspannungsreferenzsignals $u_{Aref}$ vorgesehen ist, der die vor dem Überschreiten des maximal zulässigen Wertes $i_{Amax}$ des Ausgangsstromes $i_A$ zuletzt ermittelten Transformatorspannung $u_{TX}$ der zweiten Mittel 11 zugeführt ist, wobei die dritte Berechnungseinheit 21 vorteilhaft das Ausgangsspannungsreferenzsignal $u_{Aref}$ derart berechnet, dass die Ausgangsspannung $u_A$ nach Massgabe der Formel

$$u_A = u_{TX} \cdot \frac{1}{2}$$

gebildet wird. Die dritte Berechnungseinheit 21 ist wie die erste Berechnungseinheit 17 und die zweite Berechnungseinheit 19 ausgangsseitig mit dem Eingang der Freigabeschalteinrichtung 13 zum Zwecke der Zuführung des vorstehend genannten Ausgangsspannungsreferenzsignals $u_{Aref}$ verbunden. Dieses Ausgangsspannungsreferenzsignal $u_{Aref}$ wird dann ab dem zugehörigen gewählten Zeitpunkt $t_0$, d.h. in diesem Fall der Zeitpunkt des Auftretens des Amplitudenwertes $|\phi_2|$ des zweiten magnetischen Flusses $\phi_2$ von wesentlichen gleich Null, für die Zeitdauer $T_0$ am Ausgang des Referenzsignalgenerators 10 von der Freigabeschalteinrichtung 13 freigegeben und liegt dann am Ausgang des Referenzsignalgenerators 10 ab diesem Zeitpunkt $t_0$ für die Zeitdauer $T_0$ an, so dass es der Ansteuereinrichtung 4 für die Bildung der Ansteuersignale $S_a$ für die Spannungsquelle 2 zur Verfügung steht.

Die erfindungsgemässe Vorrichtung zeichnet sich insgesamt durch einen sehr einfachen und kostengünstigen Aufbau aus, da der Schaltungsaufwand äusserst gering ist und zudem nur eine geringe Anzahl an Bauelementen für den Aufbau benötigt wird.

Eine weitere Verbesserung wird dadurch erreicht, dass der Referenzsignalgenerator 10 in einem nicht dargestellten digitalen Mikroprozessor implementiert werden kann, so dass vorteilhaft beispielsweise auf diskrete Bauteile verzichtet werden kann und eine Anpassung der Referenzsignalgenerator 10 an verschiedenste Spannungsquellen 2 und/oder Transformatoren 1, erleichtert wird und somit einfach vollzogen werden kann.

Es versteht sich, dass der Fachmann andere als die im Ausführungsbeispiel angegebene Blöcke, Einheiten und Signale mit gleicher Wirkung verwenden kann.

**Bezugszeichenliste**

1 Transformator
2 Spannungsquelle
3 elektrisches Wechselspannungsversorgungsnetz
4 Ansteuereinrichtung
5 erste Überwachungseinrichtung
6 erste Mittel
7 Strommessmittel
8 elektrische Last
9 Netzschalter
10 Referenzsignalgenerator
11 zweite Mittel
12 Auswahleinrichtung
13 Freigabeschalteinrichtung
14 Differenzbildner
15 zweite Überwachungseinrichtung
16 dritte Überwachungseinrichtung
17 erste Berechnungseinheit
18 vierte Überwachungseinrichtung
19 zweite Berechnungseinheit
20 fünfte Überwachungseinrichtung
21 dritte Berechnungseinrichtung
22 Zeitbasis
23 erster
24 zweiter Vergleicher
25 dritter Vergleicher
26 vierter Vergleicher

**Patentansprüche**

1. Verfahren zum Betrieb eines Transformators (1) an einer ansteuerbaren Spannungsquelle (2), bei dem die Spannungsquelle (2) mittels Ansteuersignalen ($S_a$) angesteuert wird und eine Ausgangsspannung ($u_A$) zur Einspeisung von Wirkleistung und/oder Blindleistung über den Transformator (1) in ein elektrisches Wechselspannungsversorgungsnetz (3) erzeugt, wobei ein Ausgangsstrom ($i_A$) der Spannungsquelle (2) auf einen maximal zulässigen Wert ($i_{Amax}$) hin überwacht wird, **dadurch gekennzeichnet, dass** eine am Transformator (1) anliegende Transformatorspannung ($u_T$) fortlaufend ermittelt wird,
dass der magnetische Fluss ($\phi$) des Transformators (1) fortlaufend ermittelt wird, dass die Spannungsquelle (2) bei Überschreiten des maximal zulässigen Wertes ($i_{Amax}$) des Ausgangsstromes ($i_A$) derart angesteuert wird, dass die Spannungsquelle (2) vom Transformator (1) getrennt wird,
dass auf ein Startsignal ($S_S$) hin eine Ausgangsspannung ($u_A$) in Abhängigkeit einer vor dem Überschreiten des maximal zulässigen Wertes ($i_{Amax}$) des Ausgangsstromes ($i_A$) zuletzt ermittelten Transformatorspannung ($u_{TX}$) und eines vor dem Überschreiten des maximal zulässigen Wertes ($i_{Amax}$) des Ausgangsstromes ($i_A$) zuletzt ermittelten ersten magnetischen Flusses ($\phi_1$) und eines zum Zeitpunkt des Startsignals ($S_S$) ermittelten zweiten magnetischen Flusses ($\phi_2$) gebildet wird,
und dass die Spannungsquelle (2) derart angesteuert wird, dass die Ausgangsspannung ($u_A$) ab einem einstellbaren Schaltzeitpunkt ($t_0$) für eine einstellbare Zeitdauer ($T_0$) an den Transformator (1) angelegt wird.

2. Verfahren nach Anspruch 1, **dadurch gekennzeichnet, dass** die Ermittlung des magnetischen Flusses ($\phi$) aus der Transformatorspannung ($u_T$) erfolgt, wobei der erste magnetische Fluss ($\phi_1$) aus der vor dem Überschreiten des maximal zulässigen Wertes ($i_{Amax}$) des Ausgangsstromes ($i_A$) zuletzt ermittelten Transformatorspannung ($u_{TX}$) gebildet wird und der zweite magnetische Fluss ($\phi_2$) aus einer zum Zeitpunkt des Startsignals ($S_S$) ermittelten Transformatorspannung ($u_{TS}$) gebildet wird.

3. Verfahren nach Anspruch 1 oder 2, **dadurch gekennzeichnet, dass** eine Phasenlage ($\psi_1$) des ersten magnetischen Flusses ($\phi_1$) und eine Phasenlage ($\psi_2$) des zweiten magnetischen Flusses ($\phi_2$) ermittelt wird,
dass eine Differenzphasenlage ($\psi_D$) aus der Phasenlage ($\psi_1$) des ersten magnetischen Flusses ($\phi_1$) und aus der Phasenlage ($\psi_2$) des zweiten magnetischen Flusses ($\phi_2$) gebildet wird,
und dass für einen Amplitudenwert ($|\phi_2|$) des zweiten magnetischen Flusses ($\phi_2$) im wesentlichen grösser Null und für eine Differenzphasenlage ($\psi_D$) im wesentlichen im Intervall $0° < \psi_D < 180°$ als einstellbarer Schaltzeitpunkt ($t_0$) das Erreichen der Differenzphasenlage ($\psi_D$) von im wesentlichen $180°$ gewählt wird.

4. Verfahren nach Anspruch 3, **dadurch gekennzeichnet, dass** die Ausgangsspannung ($u_A$) nach Massgabe der Formel

$$u_A = u_{TX} \cdot \frac{1 - \frac{|\Phi_2|}{|\Phi_1|}}{2}$$

gebildet wird.

5. Verfahren nach Anspruch 3 oder 4, **dadurch gekennzeichnet, dass** für eine Differenzphasenlage ($\psi_D$) im wesentlichen im Intervall $-180° < \psi_D < 0°$ als einstellbarer Schaltzeitpunkt ($t_0$) das Erreichen der Differenzphasenlage ($\psi_D$) von im wesentlichen $0°$ gewählt wird.

6. Verfahren nach Anspruch 5, **dadurch gekennzeichnet, dass** die Ausgangsspannung ($u_A$) nach Massgabe der Formel

$$u_A = u_{TX} \cdot \frac{1 + \frac{|\Phi_2|}{|\Phi_1|}}{2}$$

gebildet wird.

7. Verfahren nach einem der Ansprüche 1 bis 6, **dadurch gekennzeichnet, dass** für einen Amplitudenwert ($|\phi_2|$) des zweiten magnetischen Flusses ($\phi_2$) im wesentlichen gleich Null als einstellbarer Schaltzeitpunkt ($t_0$) das Auftreten des Startsignals ($S_S$) gewählt wird.

8. Verfahren nach Anspruch 7, **dadurch gekennzeichnet, dass** die Ausgangsspannung ($u_A$) nach Massgabe der Formel

$$u_A = u_{TX} \cdot \frac{1}{2}$$

gebildet wird.

9. Verfahren nach einem der Ansprüche 1 bis 8, **dadurch gekennzeichnet, dass** als einstellbare Zeitdauer ($T_0$) im wesentlichen eine halbe Periodendauer ($T_N$) einer Netzwechselspannung ($u_N$) des elektrischen Wechselspannungsversorgungsnetzes (3) gewählt wird.

10. Verfahren nach einem der Ansprüche 1 bis 9, **dadurch gekennzeichnet, dass** die Spannungsquelle (2) nach Ablauf der einstellbaren Zeitdauer ($T_0$) derart angesteuert wird, dass als Ausgangsspannung ($u_A$) die vor dem Überschreiten des maximal zulässigen Wertes ($i_{Amax}$) des Ausgangsstromes ($i_A$) zuletzt ermittelte Transformatorspannung ($u_{TX}$) an den Transformator (1) angelegt wird.

11. Vorrichtung zur Durchführung eines Verfahrens zum Betrieb eines Transformators (1) an einer ansteuerbaren Spannungsquelle (2) mit einer der Ansteuerung der Spannungsquelle (2) dienenden Ansteuereinrichtung (4), wobei die Spannungsquelle (2) entsprechend der Ansteuerung eine Ausgangsspannung ($u_A$) zur Einspeisung von Wirkleistung und/oder Blindleistung über den Transformator (1) in ein elektrisches Wechselspannungsversorgungsnetz (3) erzeugt, **dadurch gekennzeichnet, dass** eine erste Überwachungseinrichtung (5) zur Überwachung eines Ausgangsstromes ($i_A$) der Spannungsquelle (2) auf einen maximal zulässigen Wert ($i_{Amax}$) hin vorgesehen ist, die mit der Ansteuereinrichtung (4) eingangsseitig verbunden ist,
**dass** erste Mittel (6) zur fortlaufenden Ermittlung einer am Transformator (1) anliegenden Transformatorspannung ($u_T$) vorgesehen sind,
**dass** ein Referenzsignalgenerator (10) vorgesehen ist, der zweite Mittel (11) zur fortlaufenden Ermittlung des magnetischen Flusses ($\phi$) des Transformators (1) aufweist und eingangsseitig mit den ersten Mitteln (6) und ausgangsseitig mit der Ansteuereinrichtung (4) verbunden ist, wobei der Referenzsignalgenerator (10) derart ausgebildet ist, dass auf ein dem Referenzsignalgenerator (10) zugeführtes Startsignal ($S_S$) hin ein der Ausgangsspannung ($u_A$) entsprechendes Ausgangsspannungsreferenzsignal ($U_{Aref}$) in Abhängigkeit einer vor dem Überschreiten des maximal zulässigen Wertes ($i_{Amax}$) des Ausgangsstromes ($i_A$) zuletzt ermittelten Transformatorspannung ($u_{TX}$) und eines vor dem Überschreiten des maximal zulässigen Wertes ($i_{Amax}$) des Ausgangsstromes ($i_A$) zuletzt ermittelten ersten magnetischen Flusses ($\phi_1$) und eines zum Zeitpunkt des Startsignals ($S_S$) ermittelten zweiten magnetischen Flusses ($\phi_2$) gebildet wird, und **dass** der Referenzsignalgenerator (10) eine Freigabeschalteinrichtung (13) aufweist, der das Ausgangsspannungsreferenzsignal ($u_{Aref}$), ein einstellbarer Schaltzeitpunkt ($t_0$) und eine einstellbare Zeitdauer ($T_0$) zur Freigabe des Ausgangsspannungsreferenzsignals ($u_{Aref}$) am Ausgang des Referenzsignalgenerators (10) zugeführt sind.

12. Vorrichtung nach Anspruch 11, **dadurch gekennzeichnet, dass** den zweiten Mitteln (11) die Transformatorspannung ($u_T$) zugeführt ist, wobei die zweiten Mittel (11) derart ausgebildet sind, dass der erste magnetische Fluss ($\phi_1$) aus der vor dem Überschreiten des maximal zulässigen Wertes ($i_{Amax}$) des Ausgangsstromes ($i_A$) zuletzt ermittelten Transformatorspannung ($u_{TX}$) gebildet wird und der zweite magnetische Fluss ($\phi_2$) aus einer zum Zeitpunkt des Startsignals ($S_S$) ermittelten Transformatorspannung ($u_{TS}$) gebildet wird.

13. Vorrichtung nach Anspruch 11 oder 12, **dadurch gekennzeichnet, dass** die zweiten Mittel (11) derart ausgebildet sind, dass eine Phasenlage ($\psi_1$) des ersten magnetischen Flusses ($\phi_1$), ein Amplitudenwert ($|\phi_1|$) des ersten magnetischen Flusses ($\phi_1$), eine Phasenlage ($\psi_2$) des zweiten magnetischen Flusses ($\phi_2$), ein Amplitudenwert ($|\phi_2|$) des zweiten magnetischen Flusses ($\phi_2$) und die vor dem Überschreiten des maximal zulässigen Wertes ($i_{Amax}$) des Ausgangsstromes ($i_A$) zuletzt ermittelte Transformatorspannung ($u_{TX}$) gebildet werden und an deren Ausgang anliegen,
dass ein Differenzbildner (14) zur Bildung einer Differenzphasenlage ($\psi_D$) aus der Phasenlage ($\psi_1$) des ersten magnetischen Flusses ($\phi_1$) und aus der Phasenlage ($\psi_2$) des zweiten magnetischen Flusses ($\phi_2$) vorgesehen ist, und
dass eine zweite Überwachungseinrichtung (15) zur Überwachung des Amplitudenwertes ($|\phi_2|$) des zweiten magnetischen Flusses ($\phi_2$) auf einen Wert im wesentlichen grösser Null hin vorgesehen ist.

14. Vorrichtung nach Anspruch 13, **dadurch gekennzeichnet, dass** die zweite Überwachungseinrichtung (15) und der Differenzbildner (14) mit dem Eingang einer dritten Überwachungseinrichtung (16) verbunden ist, wobei die dritte Überwachungseinrichtung (16) der Überwachung der Differenzphasenlage ($\psi_D$) im wesentlichen im Intervall 0° < $\psi_D$ < 180° dient und das Erreichen Differenzphasenlage ($\psi_D$) von im wesentlichen 180° als einstellbaren Schaltzeitpunkt ($t_0$) wählt.

15. Vorrichtung nach Anspruch 14, **dadurch gekennzeichnet, dass** eine mit der Freigabeschalteinrichtung (13) eingangsseitig verbundene erste Berechnungseinheit (17) zur Bildung des Ausgangsspannungsreferenzsignals ($u_{Aref}$) vorgesehen ist, der die vor dem Überschreiten des maximal zulässigen Wertes ($i_{Amax}$) des Ausgangsstromes ($i_A$) zuletzt ermittelte Transformatorspannung ($u_{TX}$), der Amplitudenwert ($|\phi_1|$) des ersten magnetischen Flusses ($\phi_1$) und der Amplitudenwert ($|\phi_2|$) des zweiten magnetischen Flusses ($\phi_2$) eingangsseitig zugeführt sind, wobei die erste Berechnungseinheit (17) das Ausgangsspannungsreferenzsignal ($u_{Aref}$) derart berechnet, dass die Ausgangsspannung ($u_A$) nach Massgabe der Formel

$$u_A = u_{TX} \cdot \frac{1 - \frac{|\Phi_2|}{|\Phi_1|}}{2}$$

gebildet wird.

16. Vorrichtung nach einem der Ansprüche 13 bis 15, **dadurch gekennzeichnet, dass** die zweite Überwachungseinrichtung (15) und der Differenzbildner (14) mit dem Eingang einer vierten Überwachungseinrichtung (18) verbunden ist, wobei die vierte Überwachungseinrichtung (18) der Überwachung der Differenzphasenlage ($\psi_D$) im wesentlichen im Intervall -180° < $\psi_D$ < 0° dient und das Erreichen der Differenzphasenlage ($\psi_D$) von im wesentlichen 0° als einstellbaren Schaltzeitpunkt ($t_0$) wählt.

17. Vorrichtung nach Anspruch 16, **dadurch gekennzeichnet, dass** eine mit der Freigabeschalteinrichtung (13) eingangsseitig verbundene zweite Berechnungseinheit (19) zur Bildung des Ausgangsspannungsreferenzsignals ($u_{Aref}$) vorgesehen ist, der die vor dem Überschreiten des maximal zulässigen Wertes ($i_{Amax}$) des Ausgangsstromes ($i_A$) zuletzt ermittelte Transformatorspannung ($u_{TX}$), der Amplitudenwert ($|\phi_1|$) des ersten magnetischen Flusses ($\phi_1$) und der Amplitudenwert ($|\phi_2|$) des zweiten magnetischen Flusses ($\phi_2$) eingangsseitig zugeführt sind, wobei die zweite Berechnungseinheit (19) das Ausgangsspannungsreferenzsignal ($u_{Aref}$) derart berechnet, dass die Ausgangsspannung ($u_A$) nach Massgabe der Formel

$$u_A = u_{TX} \cdot \frac{1 + \frac{|\Phi_2|}{|\Phi_1|}}{2}$$

gebildet wird.

**18.** Vorrichtung nach einem der Ansprüche 13 bis 17, **dadurch gekennzeichnet, dass** eine fünfte Überwachungseinrichtung (20) zur Überwachung des Amplitudenwertes ($|\phi_2|$) des zweiten magnetischen Flusses ($\phi_2$) auf einen Wert im wesentlichen gleich Null hin vorgesehen ist, wobei die fünfte Überwachungseinrichtung (20) bei einem Wert des Amplitudenwertes ($|\phi_2|$) des zweiten magnetischen Flusses ($\phi_2$) von im wesentlichen gleich Null das Auftreten des Startsignals ($S_S$) als einstellbaren Schaltzeitpunkt ($t_0$) wählt.

**19.** Vorrichtung nach Anspruch 18, **dadurch gekennzeichnet, dass** eine mit der Freigabeschalteinrichtung (13) eingangsseitig verbundene dritte Berechnungseinheit (21) zur Bildung des Ausgangsspannungsreferenzsignals ($u_{Aref}$) vorgesehen ist, der die vor dem Überschreiten des maximal zulässigen Wertes ($i_{Amax}$) des Ausgangsstromes ($i_A$) zuletzt ermittelte Transformatorspannung ($u_{TX}$) zugeführt ist, wobei die dritte Berechnungseinheit (21) das Ausgangsspannungsreferenzsignal ($u_{Aref}$) derart berechnet, dass die Ausgangsspannung ($u_A$) nach Massgabe der Formel

$$u_A = u_{TX} \cdot \frac{1}{2}$$

gebildet wird.

**20.** Vorrichtung nach einem der Ansprüche 11 bis 19, **dadurch gekennzeichnet, dass** als einstellbare Zeitdauer ($T_0$) im wesentlichen eine halbe Periodendauer ($T_N$) einer Netzwechselspannung ($u_N$) des elektrischen Wechselspannungsversorgungsnetzes (3) gewählt ist.

**21.** Vorrichtung nach einem der Ansprüche 11 bis 20, **dadurch gekennzeichnet, dass** der Freigabeschalteinrichtung (13) die vor dem Überschreiten des maximal zulässigen Wertes ($i_{Amax}$) des Ausgangsstromes ($i_A$) zuletzt ermittelte Transformatorspannung ($u_{TX}$) zugeführt ist, wobei die Freigabeschalteinrichtung (13) derart ausgebildet ist, dass nach Ablauf der einstellbaren Zeitdauer ($T_0$) die zugeführte Transformatorspannung ($u_{TX}$) als Ausgangsspannungsreferenzsignals ($u_{Aref}$) am Ausgang anliegt.

**22.** Vorrichtung nach einem der Ansprüche 11 bis 21, **dadurch gekennzeichnet, dass** der Referenzsignalgenerator (10) in einem digitalen Mikroprozessor implementiert ist.

Fig. 1

Fig. 2

Fig. 3a

Fig. 3b

Fig. 3c

Fig. 4a

Fig. 4b

Fig. 4c

**Fig. 5a**

**Fig. 5b**

**Fig. 5c**

Europäisches
Patentamt

**EUROPÄISCHER RECHERCHENBERICHT**

Nummer der Anmeldung

EP 02 40 5208

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | HOLTZ J ET AL: "Multi-inverter UPS system with redundant load sharing control" IEEE, XP010091215 * Abbildungen 1,3 * * Seite 159-160 * * Seite 162, rechte Spalte * * Seite 163-164 * --- | 1-22 | H02M1/00 |
| A | US 5 977 659 A (FUKAE KIMITOSHI ET AL) 2. November 1999 (1999-11-02) * Zusammenfassung; Abbildung 4 * * Spalte 1-2 * * Spalte 6, Zeile 20-42 * --- | 1-22 | |
| A | YAMAGUCHI M ET AL: "Development of a new utility-connected photovoltaic inverter LINE BACK" TELECOMMUNICATIONS ENERGY CONFERENCE, 1994. INTELEC '94., 16TH INTERNATIONAL VANCOUVER, BC, CANADA 30 OCT.-3 NOV. 1994, NEW YORK, NY, USA,IEEE, 30. Oktober 1994 (1994-10-30), Seiten 676-682, XP010136368 ISBN: 0-7803-2034-4 * Zusammenfassung * * Abbildung 2 * * Seite 677, linke Spalte * * Seite 680, rechte Spalte * --- | 1-22 | RECHERCHIERTE SACHGEBIETE (Int.Cl.7) H02M H02J H02H |
| D,A | US 5 309 346 A (GYUGYI LASZLO) 3. Mai 1994 (1994-05-03) * Zusammenfassung; Abbildung 1 * ----- | 1-22 | |

Der vorliegende Recherchenbericht wurde für alle Patentansprüche erstellt

| Recherchenort | Abschlußdatum der Recherche | Prüfer |
|---|---|---|
| MÜNCHEN | 18. Juli 2002 | Zettler, K-R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.............................................................
& : Mitglied der gleichen Patentfamilie,übereinstimmendes Dokument

EPO FORM 1503 03.82 (P04C03)

**EP 1 349 263 A1**

## ANHANG ZUM EUROPÄISCHEN RECHERCHENBERICHT
## ÜBER DIE EUROPÄISCHE PATENTANMELDUNG NR.

EP 02 40 5208

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-07-2002

| Im Recherchenbericht angeführtes Patentdokument | | Datum der Veröffentlichung | Mitglied(er) der Patentfamilie | | Datum der Veröffentlichung |
|---|---|---|---|---|---|
| US 5977659 | A | 02-11-1999 | JP | 9322557 A | 12-12-1997 |
| US 5309346 | A | 03-05-1994 | KEINE | | |

EPO FORM P0461

Für nähere Einzelheiten zu diesem Anhang : siehe Amtsblatt des Europäischen Patentamts, Nr. 12/82